# EUROPEAN PATENT APPLICATION

(11) **EP 0 592 744 A1**
(43) Date of publication of application: **20.04.1994**
(21) Application number: 92500115.8
(22) Date of filing: 15.09.1992
(51) Int. Cl.: A23N 1/00

(54) **A machine for the instantaneous preparation of fruit juices**

(71) Applicant: ZUMATU, S.A., E-20570 Bergara (Guipuzcoa) (ES)
(72) Inventor: Figueiras Pastor, Angel, ES-08014 Barcelona (ES)
(74) Representative: Carpintero Lopez, Francisco

(57) **Abstract**

The machine (1) presents a central cutting and squeezing unit, with a fixed vertical knife (18) and a squeezing bolster actioned through two systems of connecting rods and crankshafts actioned from a central shaft that receives its impulses from the main motor (40) of the machine and that possesses thread form extremities (45) in the reversed sense, every one of which stimulates a helicoidal wheel (34) motoring each one of the crankshafts. The entrance of the pieces of fruit is realized through a guide that is fed by a tilting elevating system (5) able to move itself up and downwards in front of the storage area (1) of the pieces of fruit.

## Description

This invention refers to a machine designed for the instant preparation of fruit juices, especially orange juice and similar fruit juices.

As known, the consumers of fruit juices appreciate their instant preparation, which means, made at the very moment of consumption. For this reason, many different types of machines have been projected to realize fruit juices in a very fast way and with a very simple system, of which the mechanism is merely automatic, based on coins or on a button.

Many of the machines known up to now, even if they allow to obtain fruit juices with an acceptable speed, present in many cases important inconvenients because of their mechanical complication, the dirtying of their elements, and so on.

The machine which this patent deals with presents original construction characteristics and allows to realize the complete cycle of preparing an orange juice or other juices, starting from some means of storage of the pieces of fruit, transport systems for this fruit to a feeding system with a cutting system, means for the guidance of the two half oranges towards the squeezing bolsters, the squeezing bolsters and the means of collecting, inclusive among these systems of collecting, a periodical cleaning system of the grille that receives the juice.

The machine which is the subject of this patent has as its main characteristics its great mechanical solidity, which allows to obtain a high functional fiability and its fast functioning, which allows to obtain a very high production of juices.

Essentially, the machine, object of this patent, holds first of all a storing system of the pieces of fruit ready for the preparation of juices, which holds multiple inclined tracks mounted in a frame in the form of a rather parallellopipedic cage. These tracks finish in a front part foreseen with a great deal of retention hooks and allowing an elevating system to move up and downward, able to elevate the oranges from any of the channels towards the higher part, where the unloading of the taken oranges happens towards a reserve and guidance line from which they move to the cutting and squeezing system.

A possible variation of the elevating system has a unique vertical post in which some tilting transporting plates can move to the upper part, where a tilting system causes the fall of the oranges on the toboggan.

In the guidance and intermediate storage toboggan for oranges or other pieces of fruit, some transversal marks are placed whose actioning is combined with the squeezing bolster of the piece of fruit at the moment of cutting, so that for every cycle of squeezing only one piece of fruit at a time is allowed to pass to the cutting line.

The squeezing system holds two elements in the shape of caps with ondulations, and similar, and foreseen of rotatory movement to produce the juice of half an orange combined with a little pan that receives the half orange through the convex outer part of itself, presenting it towards the rotatory squeezing caps and accompanying the rest of the orange after the squeezing towards the lower part of the machine.

The machine has means to receive the juice that has been squeezed, which passes through a filtering grille to a tub that disposes of a float to control the level, and that starts or switches off the machine, allowing to have a certain reserve of freshly squeezed fruit juice for expenditure at any time.

For the extraction of the juice from the lower deposit, the machine has an electropump connected on one side with the exit of this deposit and on the other side with an exit tap. The disposition of the electropump allows to regulate the extraction of the juice from the deposit and the realization of a greater homogeneity in the juice, which reverberates on a better taste of the juice.

For a better understanding they are enclosed, as non limitative examples, some explaining drawings of a machine realized in accordance to this patent.

Figure 1 is a front sight of the fruit storage system, on which we can see the elevating mechanism.

Figure 2 is a front sight of the very system of storage, where we can see three different positions of the elevating system.

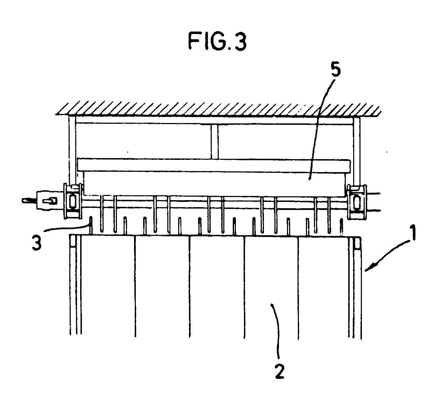

Figure 3 shows a ground figure corresponding to the former designs.

Figure 4 is a front view of the cutting and squeezing system.

Figure 5 shows an elevated lateral sidesight corresponding to figure 4.

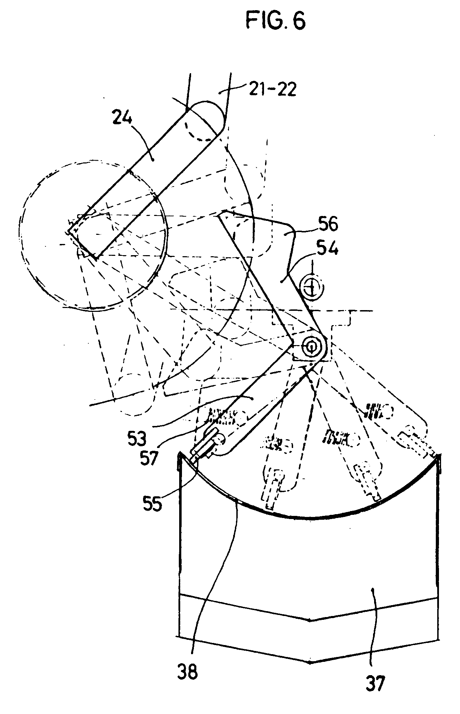

Figure 6 shows schematically a cleaning system for the sieve that receives the juice.

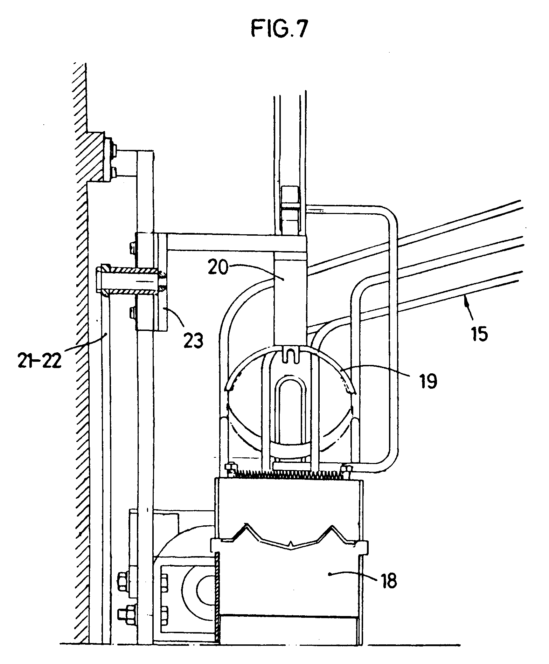

Figure 7 shows an elevated sidesight of the cutting knife.

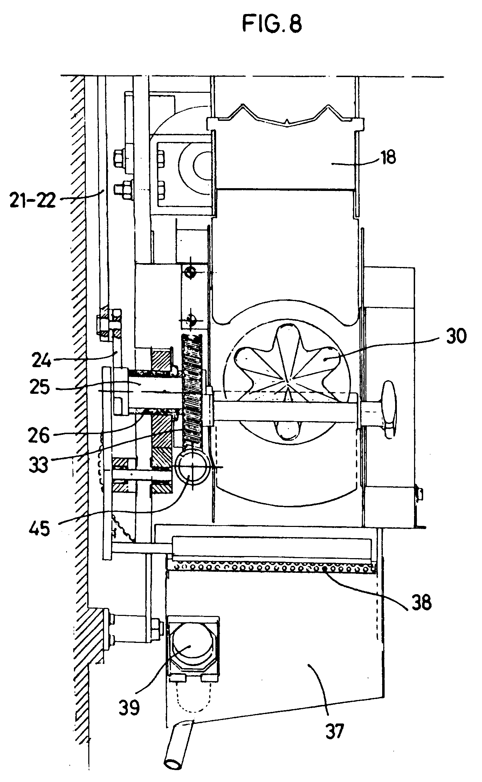

Figure 8 shows an elevated sidesight of the cutting and squeezing system.

Figures 9 and 10 are different elevated sidesights and front sights of a variant realization with a unique post for the ascending and descending of the basculating supports of the oranges.

Figure 11 is a ground sight corresponding to the proper system of only one post.

As it is shown on the figures, the machine, object of this patent, shows a storage system for the pieces of fruit that is mentioned with the general number -1-, on which we can see the disposition of many inclined ramps -2- that, in their front part, have some retention hook systems -3- for the pieces of fruit -4-. The disposal -1-is filled up at the back, having a great capacity of storage, so that the machine can operate with its own fruit reserves during several hours or even a complete day.

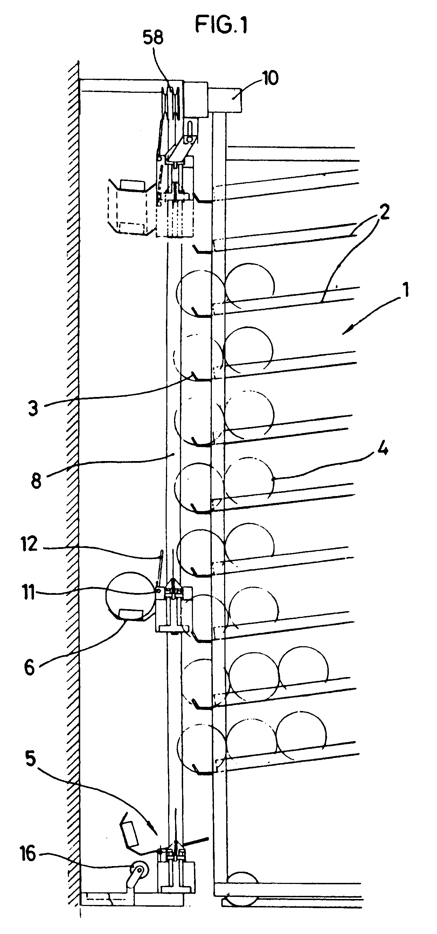

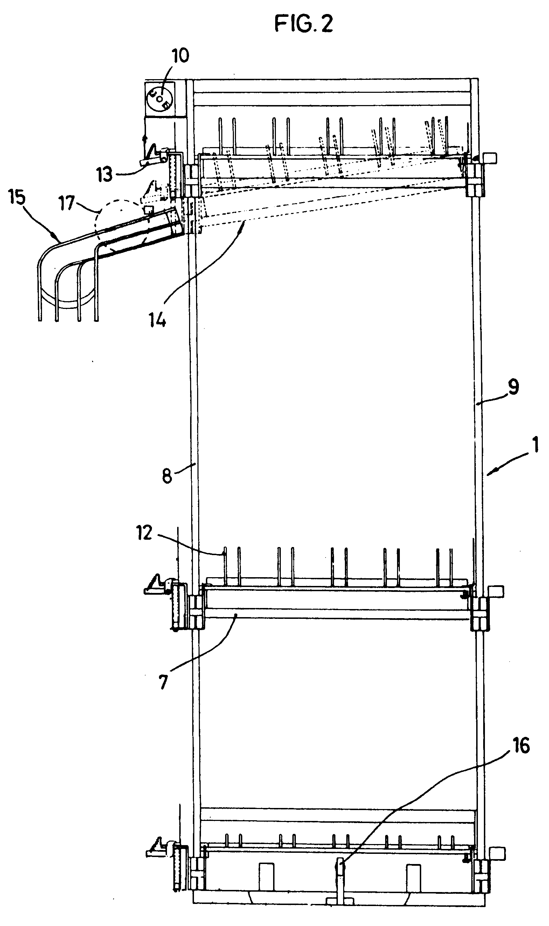

For the withdrawal of the pieces of fruit from the storage mechanism -1- the machine has an elevating system -5- which can be seen on figure 2. This elevating mechanism presents a crosspiece -7- that can be moved along the vertical guides -8- and -9- being driven by a tackle block system -58- and the corresponding cables by a separate motor -10-. The elevator presents a central tilting tray -6- which is rotatory round an ax -11- and presents a series of layers -12- grouped in pairs, as we can see on figure 2, which are able to take the pieces of fruit out of the inclined tracks where they are at first, and owing to the inclined position of the tray -6- and the layers -12- the oranges will be deposited in the keg -6-, obliging this one to tilt, as it is shown on figure 1, at this moment the elevator will be able to climb to the higher part of the storage mechanism without any interferences with other lines of oranges ready to be taken for use. When the elevator reaches the higher part of the storage mechanism -1- the actioning motor stops automatically through the action of end-of-the-road-buffers and besides, a clamp is unfastened -13- so that the layer and its crosspiece can tilt, as it is shown in the dotted position -14- on figure 2, allowing the fruit to slide to a track or toboggan -15- that will lead the pieces of fruit to the cutting and squeezing bolster.

A microruptor of end-of-the-road -16- situated in the inferior part of the storage unit, produces the automatic stop of the elevator when it comes to its lowest position.

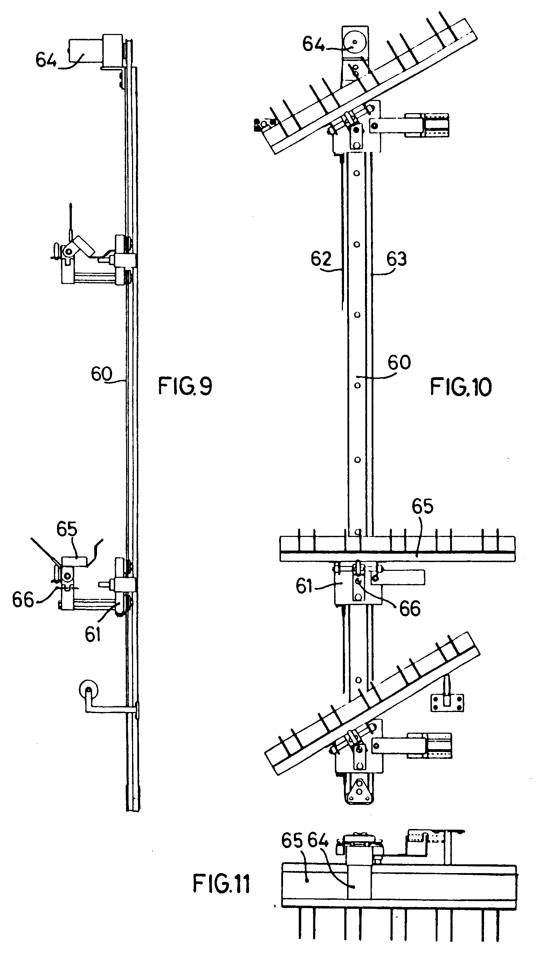

A preferable version of the lifting framework of the layers is the one presented on the figures 9, 10, and 11, in which one only vertical post -60- is run by a wagon -61- whose going up and down is controlled by a branch line cable -62- and -63- driven by an electromotor -64-. The layers -65- are tilting on an articulation ax -66- of the wagon -61-, where there is a system of fixed or mobile buffers to provoke the tilting of the trays.

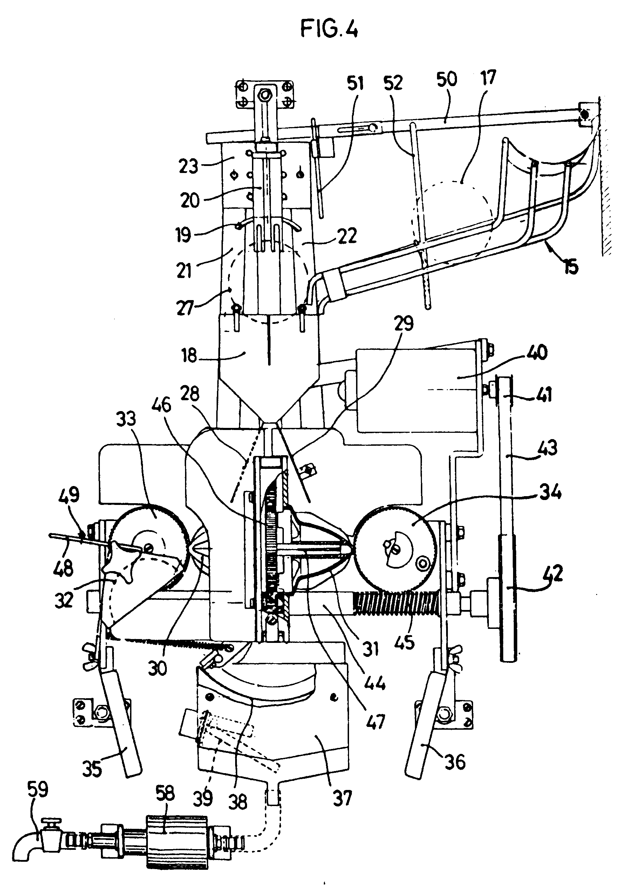

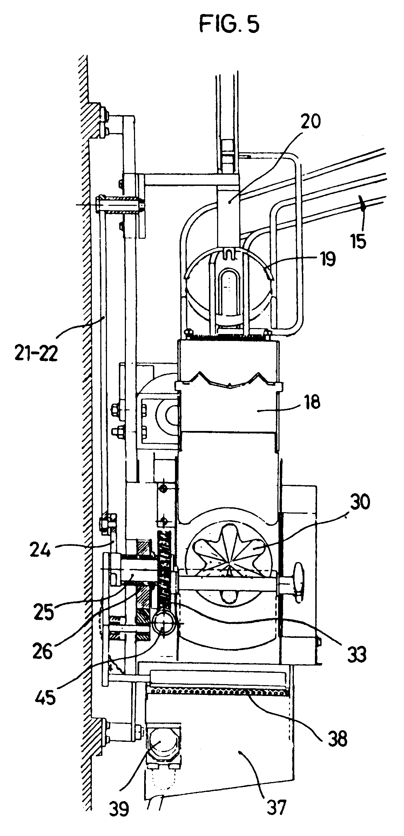

The toboggan -15- is formed by a series of bars who allow to realize the track of the pieces of fruit -17-figure 4, towards the cutting and squeezing unit, which first of all shows a stationary flat blade -18- and an arch-form squeezer -19- which is jointly shared by a vertical wagon -20- moved by the lateral connecting rods -21- and -22- that connect by their superior extremity to a transversal plate -23- and that connect by their bottom part to each crankshaft as -24-, represented on figure 5, rotatory to a horizontal ax -25- on an even cushion -26-and receiving the driving of the motoring organs of the machine, as we will explain further on.

The up and down movement of the wagon -20- is transmitted in the compression action of the treader -19-on an orange or other similar fruit -27- which is pressed against the blade -18- to be cut in two halves that are guided through each lateral baffle -28- and -29- to the two squeezing caps -30- and -31-.

To receive and present the half oranges, cut on the blade -18- to the squeezing caps -30- and -31-, the machine foresees the disposition of several pans, such as -32- one on each side of the machine, in correspondence with the respective cap, whose pans have a turning movement on pivots fixed to the helicoidal wheels -33- and -34-, receiving the cut piece of fruit and presenting it against the correspondent squeeze cap in the turning movement of the wheels -33- and -34-, which is translated into the total squeezing of the piece of fruit.

Once squeezed, the rest of the orange is conducted through the inferior baffle plates -35- and -36- to a lower recollection place, to allow its easy elimination.

The juice obtained in the squeezing operation is collected in a lower deposit -37-, through a superior grille or sieve -38-. This deposit has a constant level control system -39- that provokes the starting or stopping of the machine according to the level of liquid established in the deposit -37-.

For the exttraction of the juice from the inferior deposit -37- the machine disposes of an electropump -58-on one side connected with the exit of this deposit and on the other side with an exit tap -59-. The place of the electropump allows to regulate the extraction of the juice from the deposit and to realize a better homogeneity of this juice, which reverberates in a better taste of the juice.

The driving system of the machine has a main motor -40- which through tackle blocks -41- and -42- and the belt -43- produces the impulse of a central ax -44- gifted with two extreme sectors threaded in the inverse direction, of which only one is shown on the figure, mentioned under number -45-. From the middle part of the ax -44- and through the correspondent teeth, the toothwheel is propelled -46- which carries in its ax -47-the squeezing caps -30- and -31-.

The reversely threaded sectors of the ax -44-drive the different helicoidal wheels -33- and -34-, as can be seen on figure 4 for the threading -45-. These wheels -33- and -34- will therefore turn in opposite directions, carrying the little pans coupled to collect the pieces of cut fruit, one of which is presented with number -32- and driving by its own ax one of the two driving connecting rods of the cutting and squeezing bolster of the machine, as explained formerly.

The conduction pans of the cut orange halves, like the little pan -32- on figure 4, are foreseen of appendixes -48- designed to interfere with a transversal bar -49- to produce its turning overcoming a spring, and presentation to the lowering piece of fruit.

The mobile bolster of the machine moves jointly a crossbar or superior structure -50- of which the frames are prolonged inferiorly -51- and -52-, the first of which is much shorter than the second, so that at every complete up and down cycle, a piece of fruit -17- is liberated by the frame -52- and is held by the frame -51-, being thereafter liberated by the latter to be passed to the cutting zone of the machine.

The cleaning of the filtering grille -38- is done with a bent arm with arms -53- and -54-, the first one of them carrying a changeable extreme plate -55- and the other one having an appendix -56- driven by the rod connected to the wheel -33-. A spring -57- produces the recuperation.

It can be appreciated that with the mechanism of the described organs, the machine disposes of the mediums to work in a complete cycle, realizing the storage, extraction, alimentation, sectioning, and squeezing functions, totally automatically and very fast.

## Claims

1. Machine for the instant preparation of fruit juices, of the type that represents a series of storage tracks for the pieces of fruit and a guidance system for the transport of these to a cutting and squeezing bolster, characterized because the central cutting and squeezing unit presents a system of double squeeze caps in opposition, both caps being driven turning round a same ax, that takes its movement from a main driving ax that propels simultaneously some systems of rods for the up and downward movement of the bolster, impulsing the pieces of fruit and several receiving pans for the half oranges after the cutting and before the squeezing. These pieces of fruit reach the central unit through a fixed alimentation track, that receives the pieces of fruit through an elevating system that moves itself in the front part of the storage mechanism of the fruit, and which is capable of realizing the spillage of the collected pieces when these reach their maximum heighth.

2. Machine for the instant preparation of fruit juices, according to claim nr 1, characterized because the central cutting and squeezing unit presents a fixed inferior blade and a superior squeeze bolster that is driven by a double system of rods, each one of which holds a crankshaft and intermediate rods, every crankshaft being driven by a helicoidal wheel propelled by one or other threaded extremity of a central driving ax, these threaded axes being inversed and this main ax being driven, through a system of tackles and belts, by the driving motor of the machine.

3. Machine for the instant preparation of fruit juices, according to claim 1, characterized by the disposition of several little pans, articulated on jointly shared excentric axes of the helicoidal wheels, carrying counterweights able to establish contact with fixed buffers of the machine to produce their tilting, these little pans being able to receive the cut fruit halves for their presentation and squeezing against the squeeze caps.

4. Machine for the instant preparation of fruit juices, according to claim nr 1, characterized by the disposition of an excentric arm whose extremity runs over the arch-form sieve that receives the juice, and very close to it, cleaning the pulp that is expelled to the outside of the sieve and this bent lever receiving its direct propelling with one of the propelling crankshafts of one of the rod systems.

5. Machine for the instant preparation of fruit juices, according to claim nr 1, characterized by the disposition of a crossbar fixed to the bolster that bears the squeeze mechanism, of whose crossbar two frames prolonge themselves below, able to introduce the pieces of fruit transversally in the entrance track towards the cutting unit, allowing the gradual advance of the fruit, piece by piece, towards the cutting blades.

6. Machine for the instant preparation of fruit juices, according to claim 1, characterized because the mechanism for storing the pieces of fruit disposes of several lines of arched tracks, transversally placed in slightly inclined planes towards the zone of exit and foreseen of extreme hooks that realize the retention of the pieces of fruit and that allow the passing of an elevator that moves up and down through the front part of the storage mechanism of the fruit.

7. Machine for the instant preparation of fruit juices, according to claim 6, characterized because the elevating process has a removeable crossbar on vertical tracks situated on the front side of the mechanism of storing, this crossbar bearing a keg that extends to its whole length and that is capable of receiving the pieces of fruit that the hooks of the elevator extract from the track channels when the elevator reaches its highest point, towards the cutting and squeezing unit.

8. Machine for the instant preparation of fruit juices, according to claim nr 7, characterized because the transversal keg that is a part of the elevating system is constructed to tilt on one side, while on the other side it is held horizontal by a bolt that can be opened automatically when the elevator reaches its highest point, when the pieces are transferred through gravity to allow their passing to the cutting and squeezing mechanism.

9. Machine for the instant preparation of fruit juices, according to claim nr 8, characterized because the keg of the elevator is by itself tilting along a longitudinal ax, parallel to the ax of the keg itself, which has lots of extracting pairs of benches that coincide in the middle of each of the exit tracks of the pieces of fruit, allowing their extraction and being able to tilt this keg by way of the collected pieces of fruit, so that the correspondent extracting benches remain in a real vertical position and thus out of service.

10. Machine for the instant preparation of fruit juices, according to claim nr 1, characterized because the elevating mechanism of the pieces of fruit is made of a unique vertical post run vertically by a wagon bearing the tilting transport bench, which is turning round a horizontal ax of the own wagon in combination with a system of fixed and mobile buffers.

11. Machine for the instant preparation of fruit juices, according to claim 10, characterized because the fruit elevator has a system of motorized cable of two strands for the propelling of the trays.

12. Machine for the instant preparation of fruit juices, according to claim 4, characterized in that under the arcuate sieve receiving the juice, a storage container is arranged which lower part is connected to an outlet conduction having an intermediate electric pump for forcing the juice towards an end dispensing tap.
